# FASCICULE DE BREVET EUROPEEN

(11) **EP 3 463 954 B1**
(45) Date de publication et mention de la délivrance du brevet: **01.12.2021**
(21) Numéro de dépôt: 17727298.6
(22) Date de dépôt: 11.05.2017
(51) Int. Cl.: B60J 10/265

(54) **VITRAGE A JOINT PROFILE ET ENJOLIVEUR ET PROCEDE DE FABRICATION DU VITRAGE**
VERGLASUNG MIT PROFILIERTER DICHTUNG MIT VERKLEIDUNG UND VERFAHREN ZUR HERSTELLUNG DER VERGLASUNG
WINDOW WITH PROFILED SEALING WITH TRIM AND METHOD FOR MANUFACTURING SAID WINDOW

(30) Priorité: 30.05.2016 FR 1654841
(43) Date de publication de la demande: 10.04.2019
(73) Titulaire: SAINT-GOBAIN GLASS FRANCE, 92400 Courbevoie (FR)
(72) Inventeur: GONNET, Romain, 60610 LACROIX SAINT OUEN (FR); MACHIZAUD, Yoann, 13400 AUBAGNE (FR)
(74) Mandataire: Saint-Gobain Recherche
(86) Numéro de dépôt international: PCT/FR2017/051136
(87) Numéro de publication internationale: WO 2017/207885

(56) Documents cités:
- EP-A1- 1 944 182
- WO-A1-2015/015119
- DE-A1- 2 716 071
- DE-A1- 2 821 095
- DE-U1-202010 001 223
- FR-A1- 2 687 964
- US-A1- 2013 305 612

## Description

La présente invention concerne un vitrage comprenant un élément vitré, au moins une portion de joint profilé et au moins un enjoliveur présentant une forme allongée qui s'étend selon un bord dudit élément vitré et présentant en section transversale une forme générale avec une base et au moins une aile s'étendant à partir de ladite base, ladite base étant située, lorsque l'enjoliveur est installé sur le vitrage, au-dessus d'une face extérieure de ladite portion de joint profilé et ledit enjoliveur étant fixé à ladite portion de joint profilé sans élément de fixation intermédiaire.

La présente invention concerne également un procédé de fabrication du vitrage correspondant.

Dans tout le présent document, l'expression « enjoliveur » désigne un accessoire du vitrage, en particulier un accessoire de forme allongée ; elle ne désigne pas un élément de carrosserie de véhicule. Un tel enjoliveur est utilisé pour distinguer visuellement le bord du vitrage, vu de l'extérieur ; il présente souvent une apparence métallique brillante (« chromée ») ou une apparence colorée.

Il est connu d'utiliser des enjoliveurs constitués de profilés en forme de U qui viennent se fixer par clipage sur des clips intermédiaires qui sont eux-mêmes attachés à la portion de joint profilé qui est réalisée par exemple en un polymère souple et qui est présente en périphérie du vitrage.

L'art antérieur connaît à ce titre la demande brevet français N° FR 2 340 217. Dans ce document le clip intermédiaire est une agrafe.

Il est connu par ailleurs, notamment de certaines variantes présentées dans la demande de brevet européen N° EP 1 944 182, de fixer directement un enjoliveur avec des pattes à un cordon profilé, sans clip intermédiaire.

Ce document divulgue qu'au moins un élément de rétention, notamment en forme de flèche, peut être introduit dans un trou ménagé préalablement en face extérieure de la portion de joint, ce trou pouvant déboucher sur la face intérieure de la portion de joint ; Cet élément de rétention se situe, dans sa position finale, à l'intérieur de la portion de joint, en partie seulement au contact de la portion de joint car le trou qui l'accueil est plus grand : ce document expose qu'il est indispensable de prévoir une cavité ou un canal sous la portion de rétention de la portion de joint ; cette cavité/ce canal implique nécessairement qu'une partie de la tête de l'élément de rétention n'est pas en contact avec la matière de la portion de joint.

Ce document expose par ailleurs que la portion de joint est d'abord fabriquée seule, puis l'élément de rétention est introduit par une perforation de telle sorte que sa tête se trouve dans la cavité/le canal ; cela impose que la fabrication de la portion de joint est très compliquée car il faut prévoir des moyens particuliers pour que cette cavité/ce canal puisse exister.

Cette solution de rétention présente l'avantage de pouvoir être adoptée lorsque l'espace disponible entre la périphérie du vitrage et la carrosserie adjacente est faible.

Toutefois, la fixation de l'enjoliveur par cet élément de rétention n'est pas suffisamment fiable : même si plusieurs éléments de rétention sont prévus, l'enjoliveur peut être facilement retiré car il suffit d'appliquer un mouvement dans la même direction mais dans le sens contraire du mouvement d'introduction des éléments de rétention dans les trous.

Il est connu par ailleurs de prévoir une couche de promoteur d'adhérence entre une face intérieur de l'enjoliveur et une face extérieure de la portion de joint profilé afin que cette face intérieure adhère à cette face extérieure ; toutefois, l'application de cette couche complexifie le procédé de fabrication et provoque une augmentation du coût.

L'art antérieur connaît de de la demande de brevet WO 2015/015119 un vitrage du type mentionné ci-dessus dont une aile comporte à une extrémité opposée à ladite base au moins une patte ajourée qui traverse ladite portion de joint profilé par un trou débouchant sur une face extérieure et sur une face intérieure de ladite portion de joint profilé, ladite patte ajourée étant rabattue sous ladite portion de joint profilé ou sous ledit élément vitré.

Selon ce document, la patte ajourée de l'enjoliveur est ainsi introduite, après fabrication de la portion de joint profilé, par l'entrée du trou qui se situe en face extérieure de la portion du joint et cette patte ressort ensuite du trou par la face intérieure de la portion de joint, afin de pouvoir être rabattue contre cette face intérieure de ladite portion de joint profilé ou contre une face intérieure dudit élément vitré et permettre de maintenir l'enjoliveur sous la portion de joint profilé afin qu'il reste bien positionné au-dessus de la portion de joint profilé.

L'enjoliveur est très bien maintenu après le rabat de la ou des pattes ajourées, mais cette solution est complexe à mettre en œuvre et engendre un taux de mise au rebut plus élevée que souhaité en raison de la complexité du moule à l'endroit du trou qui accueille chaque patte ajourée.

La présente invention a pour but de remédier aux inconvénients de la technique antérieure en proposant un enjoliveur qui peut être fixé d'une manière non-amovible de manière simple, rapide et fiable à une portion de joint et en particulier lorsque l'espace disponible entre la périphérie du vitrage et la carrosserie adjacente est faible.

Un but particulier de l'invention est de permettre que l'enjoliveur ne puisse pas être désassemblé du vitrage tant que le vitrage est fixé à la carrosserie du véhicule.

Un autre but est de faciliter la mise en œuvre industrielle de la solution et de produire d'une manière très fiable, avec un très faible taux de rebut.

La présente invention repose ainsi sur une solution selon laquelle l'enjoliveur est pourvu d'au moins une patte et, lors de la fabrication de la portion de joint profilé par moulage, cette patte se trouve complètement intégrée dans la portion de joint profilé sans le traverser complètement ; la position de cette patte par rapport à l'enjoliveur qui la porte et par rapport à la portion de joint profilé dans laquelle elle se trouve intégrée étant fixe, c'est-à-dire non modifiable et non modifiée sans endommager la portion de joint profilé.

La patte, ainsi que l'aile qui la porte, appartiennent ainsi toutes les deux à l'enjoliveur ; La patte, ainsi que l'aile qui la porte sont venues de matière avec la base de l'enjoliveur.

Un avantage important de l'invention est constitué par le fait que la patte selon l'invention, complètement intégrée dans la portion de joint profilé, réalise une accroche mécanique dans cette la portion de joint profilé pour l'enjoliveur. Ainsi, il n'est pas nécessaire de prévoir une couche de promoteur d'adhérence entre une face intérieure de l'enjoliveur et une face extérieure de la portion de joint profilé qui est en vis-à-vis ; selon l'invention, il n'y a donc pas d'adhérence entre l'enjoliveur et la portion de joint profilé.

La présente invention se rapporte, dans son acception la plus large, à un vitrage selon la revendication 1. Les autres revendications exposent des variantes avantageuses. Ce vitrage comprend un élément vitré, au moins une portion de joint profilé et au moins un enjoliveur présentant une forme allongée qui s'étend selon un bord dudit élément vitré et qui présente en section transversale une forme générale avec une base et au moins une aile s'étendant selon un angle non nul à partir de ladite base, ladite base étant située au-dessus d'une face extérieure de ladite portion de joint profilé.

Ce vitrage est remarquable en ce que ladite aile dudit enjoliveur comporte à une extrémité opposée à ladite base au moins une patte qui est présente dans ladite portion de joint profilé en pénétrant dans ladite portion de joint profilé par un trou débouchant sur ladite face extérieure et ne débouchant pas sur une face intérieure de ladite portion de joint profilé et ladite patte étant intégralement au contact de ladite portion de joint profilé.

Ce contact est tel que la matière de la portion de joint profilé touche toute la surface de la patte, sur tout sa hauteur, des deux côtés et sur toute son épaisseur, depuis l'extrémité de l'aile qui porte la patte jusqu'au plus bas. Le trou qui accueille la patte présente ainsi une forme complémentaire de la patte, qui peut s'observer à l'œil nu si la matière de la portion de joint profilé est découpé à cet endroit.

Ladite patte est présente complètement dans ladite portion de joint profilé.

Lorsqu'il est exposé que ladite patte est intégralement au contact de ladite portion de joint profilé cela signifie aussi, bien sûr, qu'inversement ladite portion de joint profilé est intégralement au contact de ladite patte ; ladite patte est noyée dans ladite portion de joint profilé ; il n'y a pas de cavité, ou de canal, dans la portion de joint profilé pour l'accueil d'une partie de ladite patte.

L'enjoliveur est fixé à ladite portion de joint profilé directement, sans élément de fixation intermédiaire ni couche favorisant l'adhésion de l'enjoliveur à la portion de joint profilé et la fixation non-amovible et uniquement mécanique de l'enjoliveur dans la portion de joint profilé est efficace.

La notion de trou débouchant sur la face extérieure de la portion de joint profilé et par lequel la patte pénètre dans cette portion de joint désigne le fait que dans cette face extérieure, la section interne du trou est très exactement identique à la section externe de la patte à cet endroit.

La patte peut présenter tout son long, à l'intérieur de la portion de joint profilé une section externe identique à la section interne du trou en face extérieure de la portion de joint profilé ; toutefois, il est préférable qu'à l'intérieur de la portion de joint profilé, au moins une section externe de la patte soit supérieure à une/la section interne du trou en face extérieure de la portion de joint profilé afin que la patte soit mieux retenue, mécaniquement, à l'intérieur de la portion de joint profilé.

La base peut être plate ou légèrement courbée selon sa largeur ; une aile peut être plate ou légèrement courbée selon sa largeur.

De préférence, ladite aile s'étend à une extrémité transversale de ladite base, c'est-à-dire à partir d'une extrémité transversale de ladite base. Ainsi, lorsque l'enjoliveur est observé en coupe transversale, ce qui distingue une aile de la base c'est la présence entre les deux et au bout de chacune, d'un coude prononcé, c'est-à-dire une variation d'angle importante, supérieure à la courbe générale éventuelle de la base ou de l'aile. L'enjoliveur est ainsi plus facile à fabriquer et moins onéreux.

De préférence, ladite patte est pleine ; elle n'est pas ajourée ; elle ne comporte pas un jour, c'est-à-dire un trou, qui traverserait de part en part l'épaisseur de la patte. En effet, il serait alors difficile de maîtriser le remplissage complet de ce trou par la matière de la portion de joint profilé.

Ladite patte, ou chaque patte, est, de préférence, dans le prolongement de ladite aile, afin de faciliter la fabrication dudit enjoliveur ; cette patte, ou chaque patte, est, de préférence venue de matière avec ladite aile; l'enjoliveur est, de préférence, en une pièce de métal unique, constitué d'une feuille métallique simple (non doublée), pliée.

De préférence, ladite patte, ou chaque patte, est plate et se situe dans le prolongement de l'aile de l'enjoliveur qui la porte, c'est-à-dire que son épaisseur à la liaison avec l'aile est identique et dans le prolongement de l'épaisseur de l'aile à cet endroit.

Pour que la fixation de l'enjoliveur soit suffisamment fiable, il est préférable que ladite patte, ou chaque patte présente une forme générale de T inversé, un tronc du T étant venu de matière avec ladite aile. Ainsi, il n'est pas possible de retirer la patte sans exercer un effort très important du fait qu'il faut endommager le trou et donc la portion de joint profilé.

Pour améliorer encore cette fixation, il est possible que cette patte, ou chaque patte, présente une forme générale de T inversé avec :
- au moins une branche du T en biseau vers le tronc, et de préférence les deux branches du T, chacune en biseau vers le tronc, afin d'améliorer la retenue de l'enjoliveur par la patte dans la portion de joint profilé, et/ou
- au moins une branche du T qui présente au moins une dent qui s'étend en direction de ladite aile, afin d'améliorer la retenue de l'enjoliveur par la patte dans la portion de joint profilé, et/ou
- au moins une branche du T qui est parallèle à l'extrémité de l'aile sur son bord qui est à l'opposé de ladite extrémité de l'aile, afin de faciliter la répartition de la matière de la portion de joint lors de son moulage.

Pour que la fixation soit suffisamment fiable, ladite patte présente, de préférence, une épaisseur identique à celle de ladite aile et une longueur comprise entre 0,5 et 2 fois sa hauteur à compter l'extrémité de ladite aile.

Il est possible que ladite portion de joint profilé présente en face intérieure un bossage en vis-à-vis de ladite patte. Ainsi le volume de la portion de joint dans lequel est noyé la patte est plus grand et le maintien de la patte dans la portion de joint profilé est meilleur.

La largeur hors-tout de ce bossage est supérieure à la largeur L, hors tout, de ladite patte d'environ 1,5 à 4 mm de chaque côté (c'est-à-dire d'environ 3 à 8 mm en tout) pour bien ancrer la patte tout en économisant de la matière de la portion de joint profilé.

Pour augmenter encore l'effet de maintien mécanique, ladite portion de joint profilé est, de préférence, au contact de ladite aile sur une partie au moins de sa hauteur, et de préférence en contact de chaque côté longitudinal de ladite aile, sur une partie au moins de sa hauteur.

Ladite portion de joint profilé peut en particulier être au contact de ladite aile sur la totalité de sa hauteur, et de préférence en contact de chaque côté longitudinal de ladite aile sur toute sa hauteur.

Ladite portion de joint profilé est, de préférence, au contact d'une surface intérieure de ladite base, sans couche de promoteur d'adhérence intercalée entre ladite base et ladite portion de joint profilé.

La base et l'aile au moins qui comporte au moins une patte présentent chacune une forme de plaque allongée. La base est de préférence pleine, sans ajour ; l'aile est de préférence pleine, sans ajour.

La base et l'aile au moins qui comporte au moins une patte sont orientées l'une par rapport à l'autre d'un angle non nul qui est de préférence proche de l'angle droit ; cet angle peut être compris, lorsque l'enjoliveur est vu en coupe, entre 60° et 120° ; cet angle peut être arrondi. Par exemple, l'enjoliveur peut alors présenter en coupe une forme générale de L avec un angle arrondi entre l'aile unique et la base.

Lorsque l'enjoliveur comporte deux ailes dont une au moins voire les deux comporte(nt) au moins une patte, l'angle entre chaque aile et la base est un angle non nul qui peut être proche de l'angle droit ; chaque angle peut être compris, lorsque l'enjoliveur est vu en coupe, entre 60° et 120° ; chaque angle peut être arrondi. Par exemple, l'enjoliveur peut alors présenter en coupe une forme générale de U avec un angle arrondi entre chaque aile et la base.

Ce U est positionné à l'envers sur ou au-dessus de la portion de joint profilé (c'est-à-dire sur ou au-dessus de la face extérieure de la portion de joint profilé) avec une partie creuse du U orientée vers ladite portion de joint profilé.

De préférence, une partie de face intérieure de la base du U de l'enjoliveur est en contact avec une partie de la face extérieure de la portion de joint profilé, notamment le long d'une partie la plus à l'extérieure d'un bossage de la portion de joint profilé.

L'aile, ou les ailes, s'étend(ent) à partir de la base; la base et l'aile ou les ailes sont ainsi liées entre elles afin de former l'enjoliveur.

Lorsque l'enjoliveur comporte deux ailes, l'aile distale est l'aile de l'enjoliveur qui est le plus éloignée de l'élément vitré à l'état monté.

Dans une première variante, indépendante, vu en coupe transversale, en particulier à l'endroit de la présence d'une patte, ledit enjoliveur présente une forme générale de U, avec une première aile qui comporte au moins ladite patte et une seconde aile qui pénètre dans une cavité ménagée sur la face extérieure de ladite portion de joint profilé et ne débouchant pas sur la face intérieure de ladite portion de joint profilé. Cette seconde aile, qui est de préférence longitudinale, permet de réaliser avec cette cavité qui est alors aussi de préférence longitudinale, un support de contre-réaction.

Dans cette première variante, il est possible que ladite seconde aile soit proximale, c'est-à-dire la plus proche de l'élément vitré à l'état monté, et que ladite première aile soit distale, c'est-à-dire la plus éloignée de l'élément vitré à l'état monté, afin que la patte soit plus facilement noyée dans la matière de la portion de joint profilé ; toutefois, il est aussi possible de réaliser l'inverse.

Dans une seconde variante, indépendante, vu en coupe transversale, en particulier à l'endroit de la présence d'une patte, ledit enjoliveur présente une forme générale de L, avec la base qui pénètre dans une cavité ménagée sur la face extérieure de ladite portion de joint profilé et ne débouchant pas sur la face intérieure de ladite portion de joint profilé. Cette cavité réalise aussi un support de contre-réaction.

Dans une troisième variante, indépendante, vu en coupe transversale, en particulier à l'endroit de la présence d'une patte, ledit enjoliveur présente une forme générale de U, avec
- une première aile qui comporte à une extrémité opposée à ladite base au moins ladite patte, cette première patte étant présente dans ladite portion de joint profilé en pénétrant dans ladite portion de joint profilé par un trou débouchant sur ladite face extérieure et ne débouchant pas sur une face intérieure de ladite portion de joint profilé et ladite patte étant intégralement au contact de ladite portion de joint profilé, et
- une seconde aile qui comporte à une extrémité opposée à ladite base au moins une seconde patte, ladite seconde patte étant présente dans ladite portion de joint profilé en pénétrant dans ladite portion de joint profilé par un trou débouchant sur ladite face extérieure et ne débouchant pas sur une face intérieure de ladite portion de joint profilé et ladite seconde patte étant intégralement au contact de ladite portion de joint profilé.

Ces trois variantes ne sont pas exclusives l'une de l'autre car il est possible qu'un enjoliveur comporte une variante à un endroit et une autre variante à un autre endroit selon sa longueur, voire encore une autre variante à un autre endroit selon sa longueur.

Il est possible aussi que l'enjoliveur comporte plus de deux ailes à un endroit ou tout son long; par exemple, l'enjoliveur peut présenter une forme générale de U avec environ au milieu de la base, une troisième aile s'étendant à partir de la base, du même côté que les deux autres par rapport à la portion de joint profilé. Il est possible de munir cette troisième aile d'une patte ou de plusieurs pattes selon l'invention. Eventuellement, seule cette troisième aile comporte des pattes selon l'invention.

La présente invention se rapporte aussi à un procédé de fabrication d'un vitrage suivant l'invention, ledit vitrage comprenant un élément vitré, au moins une portion de joint profilé, au moins un enjoliveur présentant une forme allongée qui s'étend selon un bord dudit élément vitré et en section transversale une forme avec une base et au moins une aile s'étendant selon un angle non nul à partir de ladite base, ledit procédé étant remarquable en ce que ladite aile comporte à une extrémité opposée à ladite base au moins une patte et en ce que ladite portion de joint profilé est formée par moulage sur ledit élément vitré en étant au contact intégralement de ladite patte.

Ladite portion de joint profilé présente, de préférence, un trou pour accueillir ladite patte et qui est formé lors du moulage débouchant sur une face extérieure mais pas sur une face intérieure de ladite portion de joint profilé.

Ladite portion de joint profilé est, de préférence, formée par moulage sur ledit élément vitré en étant au contact de ladite aile sur une partie au moins de sa hauteur et de préférence en contact de chaque côté longitudinal de ladite aile.

Ladite portion de joint profilé est, de préférence, formée par moulage sur ledit élément vitré en étant au contact d'une surface intérieure de ladite base; il n'y a pas de couche de promoteur d'adhérence intercalée entre ladite base et ladite portion de joint profilé.

Le trou de la portion de joint dans lequel est présent la patte se forme automatiquement lors de la fabrication de ladite portion de joint profilé par moulage, en particulier lorsque cette portion de joint profilé est fabriquée par une technique d'encapsulation. Lorsque la matière de la portion de joint profilé est introduite dans la cavité du moule qui comporte l'enjoliveur, cette matière vient intégralement au contact de la patte, voire au contact d'une partie de l'aile qui porte la patte.

On décrira ci-après, à titre d'exemples non limitatifs, plusieurs formes d'exécution de la présente invention, en référence aux dessins annexés sur lequel :
- la figure 1 illustre une vue en perspective d'un vitrage selon l'invention, le vitrage étant vu de l'extérieur;
- la figure 2 est une vue en perspective du vitrage de la figure 1, le vitrage étant vu de l'intérieur ;
- la figure 3 est une vue partielle, en perspective et en coupe selon AA de la figure 2 ;
- la figure 4 est une vue partielle en perspective illustrant l'enjoliveur de la figure 3 et montrant plusieurs pattes sur la même aile ;
- les figures 5, 6 et 7 illustrent trois exemples de réalisation de patte ; et
- la figure 8 est une vue partielle en perspective équivalente à la figure 4 pour une autre variante de réalisation d'un enjoliveur, à pattes sur deux ailes.

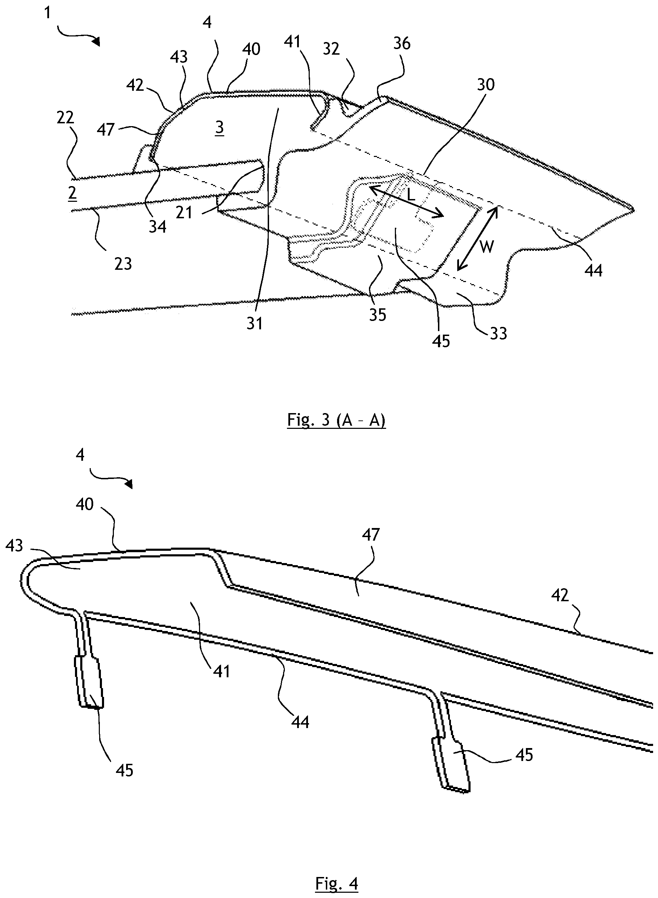

Dans ces figures, les proportions entre les différents éléments sont respectées sur chaque figure mais les éléments en arrière-plan ne sont en général pas représentés, sauf sur la figure 3, afin de faciliter leur lecture.

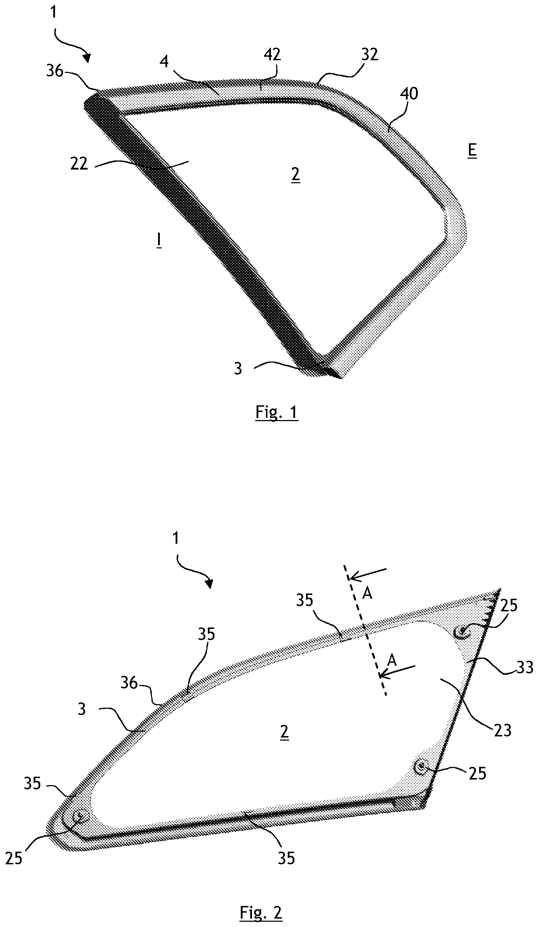

La présente invention se rapporte à un vitrage 1, et notamment un vitrage de véhicule tel que visible en figures 1 et 2. Ce vitrage comprend un élément vitré 2, au moins une portion de joint profilé 3 fixée à l'élément vitré, au moins une pièce rapportée, telle qu'un enjoliveur 4 fixé directement à ladite portion de joint profilé 3 ; il n'y a pas, pour l'invention, de pièce de fixation intermédiaire qui serait fixé d'une part à l'enjoliveur 4 et d'autre part à ladite portion de joint profilé 3, entre ces deux éléments.

Le vitrage 1 selon l'invention qui est illustré est un vitrage latéral arrière fixe d'une automobile (custode arrière). Il comporte un élément vitré 2 qui est muni d'une portion d'une portion de joint(ou cordon) profilé 3 en un matériau polymère souple qui fait tout le tour de l'élément vitré 2.

Le vitrage 1, qui comporte éventuellement en outre un (ou des) accessoire(s) et notamment un (ou des) accessoire(s) 25 de fixation du vitrage, est destiné à fermer une baie réalisant une séparation entre un espace intérieur I du véhicule et un espace extérieur E au véhicule. L'élément vitré 2 présente ainsi une face extérieure 22 destinée à être tournée vers l'espace extérieur E, une face intérieure 23 destinée à être tournée vers l'espace intérieur I, ainsi qu'un chant 21 périphérique.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation (non illustrée).

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Sur les figures 1 à 3, l'élément vitré 2 est un vitrage monolithique. Le vitrage illustré est un vitrage fixe, mais la présente invention peut aussi s'appliquer à un vitrage mobile.

La portion de joint profilé 3 présente ainsi une face extérieure 32 qui est destinée à être orientée vers l'extérieur E du véhicule, ainsi qu'une face intérieure 33 qui est destinée à être orientée vers l'intérieur I du véhicule.

Le matériau polymère constitutif de la portion de profilé 3 peut être un thermoplastique (PVC, TPE, ...), un polyuréthanne ou encore un caoutchouc synthétique du type EPDM ou toute autre matière adéquate.

La portion de joint profilé 3 est, de préférence, fabriqué par mise en œuvre d'un procédé de fabrication appelé « encapsulation » car il comporte une étape de moulage de la portion de joint profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive de la portion de joint profilé pendant l'étape de moulage de cette la portion de joint profilé.

La portion de joint profilé 3 est, de préférence, disposée sur toute la périphérie du vitrage 1 mais cette portion de joint profilé pourrait tout à fait n'être positionnée que sur une partie de la périphérie du vitrage ou sur une partie quelconque du vitrage.

L'enjoliveur 4 présente une forme allongée qui s'étend selon au moins un bord de l'élément vitré 2 et qui s'étend ici selon trois bords de l'élément vitré : un bord bas, un bord arrière et un bord haut. L'enjoliveur 4 présente en section transversale une forme générale avec une base 40 et au moins une aile 41 s'étendant selon un angle non nul à partir de la base, la base étant située au-dessus d'une face extérieure 32 de ladite portion de joint profilé 3.

Sur les figures, l'enjoliveur 4 recouvre ainsi une portion de la face extérieure 32 du joint profilé et notamment un bossage 31, longitudinal, qui s'étend tout le long de l'enjoliveur 4, sous la base 40.

C'est pour améliorer l'aspect esthétique du vitrage, qu'une partie de la portion de joint profilé 3 visible de l'extérieur du véhicule est masquée par l'enjoliveur 4.

L'enjoliveur est préfabriqué : il a été fabriqué, et éventuellement mise en forme, préalablement à sa fixation au vitrage. Il peut être en aluminium, alliage d'aluminium, acier et notamment acier inoxydable.

Le matériau qui le constitue présente de préférence un module d'élasticité compris entre 80.10³ MPa et 500.10³ MPa afin de présenter une rigidité élevée.

L'enjoliveur présente une forme complexe : il présente en coupe transversale une forme avec une base 40 centrale et au moins une aile 41, 41' qui s'étend à partir de ladite base. Cette aile 41 ou ces ailes 41, 41' s'étendent ici (chacune) à partir d'une extrémité transversale de la base 40. Cette forme est positionnée à l'envers avec la base située au-dessus, ou précisément ici sur, la face extérieure de ladite portion de joint profilé 3 afin de recouvrir le bossage 31. La face intérieure 42 de l'enjoliveur est ainsi en contact avec la face extérieure 32 de la portion de joint profilé 3 au moins le long de la partie la plus à l'extérieure du bossage 31.

Selon l'invention, comme visible en figure 3 et 4, vu en coupe transversale (c'est-à-dire transversalement par rapport à ladite direction allongée de l'enjoliveur), une aile 41 distale de l'enjoliveur comporte à une extrémité 44 opposée à la base 40 au moins une patte 45 et de préférence plusieurs pattes 45.

Cette patte 45 (et de préférence ces pattes 45) est (ou sont) présente(s) dans la portion de joint profilé 3 en pénétrant dans ladite portion de joint profilé 3 par un trou 30 débouchant sur ladite face extérieure 32 et ne débouchant pas sur une face intérieure 33 de ladite portion de joint profilé 3 ; en outre Cette patte 45 (et de préférence ces pattes 45) est (ou sont) intégralement au contact de la portion de joint profilé 3, depuis l'extrémité 44 de l'aile qui porte la patte et sur toute la hauteur de la (ou des) pattes ; Cette patte 45 (et de préférence ces pattes 45) est (ou sont) noyée (s) dans la portion de joint profilé 3.

Le trou dans lequel est (ou sont) cachée(s) la (ou chacune des) patte(s) présente une forme complémentaire de la patte.

L'aile 41 qui porte la (ou des) patte (s) 45 est de préférence longitudinale ; et de préférence tout le long de l'enjoliveur.

La patte 45, et de préférence chaque patte 45, est pleine et ne comporte ainsi pas de un jour, ou autrement dit pas de lumière, par laquelle pourrait alors passer la matière du joint profilé 3.

Lorsqu'il y a plusieurs pattes 45, pour fixer l'enjoliveur 4 à la portion de joint profilé 3, chacune des pattes 45 est dans un trou 30 débouchant sur la face extérieure 32 et ne débouchant pas sur la face intérieure 33 de ladite portion de joint profilé 3 et chaque patte 45 est intégralement au contact de ladite portion de joint profilé 3.

Le trou 30, ou chaque trou 30, est, de préférence, formé lors de la fabrication par moulage de la portion de joint profilé 3.

Comme visible sur les figures, la patte 45, ou chaque patte, est dans le prolongement de l'aile qui la porte et elle est ici, de préférence venue de matière avec l'aile qui la porte ; l'enjoliveur est, ici en une pièce de métal unique, constitué d'une feuille métallique simple (non doublée) d'une épaisseur par exemple de 0,4 mm à 2 mm, pliée.

La figure 3 montre que, en proportion, l'épaisseur de la portion de joint profilé 3 est relativement faible en dehors de la zone où est présente la patte 45 et plus épaisse dans la zone où est présente la patte 45 ; La portion de joint profilé 3 présente ainsi en face intérieure 33 un bossage 35, local, en vis-à-vis de la patte 45, et uniquement en vis-à-vis de la patte 45, qui permet de prévoir plus de matière de la portion de joint profilé et ainsi un meilleur ancrage de la patte dans la matière de la portion de joint profilé. Ce bossage 35 peut servir de butée pour l'épaisseur de la colle (non illustrée) qui sert à coller le vitrage dans la baie de la carrosserie. Ceci illustre en particulier l'intérêt de l'invention pour les configurations où l'espace disponible entre le chant 21 de l'élément vitré et la carrosserie adjacente (non illustré) est petit.

Ici, la largeur hors-tout de ce bossage 35 est supérieure à la largeur L, hors tout de ladite patte d'environ 2 mm de chaque côté.

Comme visible sur la figure 3, la patte 45, ou chaque patte, présente de préférence une longueur L comprise entre 0,5 et 2 fois sa hauteur w considérée à partir de l'extrémité 44 de l'aile 41 ; ici, le rapport est de 1:1.

La patte 45 présente une forme générale de T inversé, un tronc du T étant venu de matière avec l'aile 41. Il n'est donc pas possible de retirer la patte 45 et a fortiori l'enjoliveur 4, sans endommager le trou dans lequel est la patte et donc la portion de joint profilé.

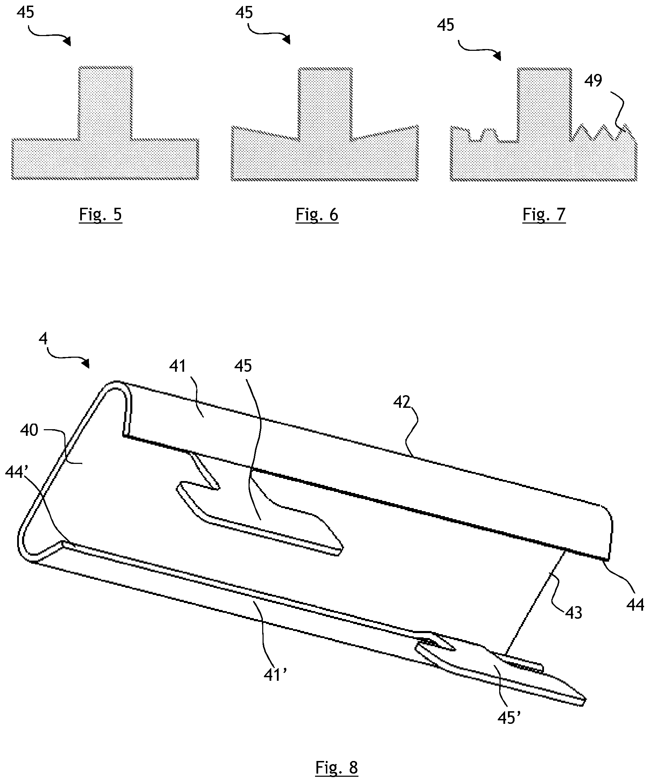

Les figures 5 à 7 illustrent différente variantes de réalisation de la forme générale de T inversé :
- en figure 5, les branches du T sont droites, de la même hauteur sur toute leur longueur,
- en figure 6, les branches du T sont en biseau vers le tronc c'est-à-dire qu'elles sont moins hautes vers le tronc, et
- en figure 7, les branches du T présentent chacune au moins une dent 49, par exemple triangulaire ou parallélépipédique, qui s'étend en direction de l'aile 41, et de préférence présentent chacune plusieurs dents.

Ces variantes sont bien sûr cumulables entre elles pour une branche ou pour les deux branches.

Dans l'absolu, il est possible de réaliser une patte 45 en forme de L, c'est-à-dire en forme de T comme illustré, mais avec une seule branche ; toutefois, cela engendre alors un déséquilibre dans le maintien de l'enjoliveur par la portion de joint profilé.

L'enjoliveur 4 est maintenu contre la face intérieure 33 grâce à la patte 45 (ou aux pattes 45), noyée(s) dans la portion de joint profilé.

La portion de joint profilé 3 est ainsi au contact de la surface intérieure 43 de la base 40 sans couche de promoteur d'adhérence intercalée entre la base 40 et la portion de joint profilé 3 et même sans couche de promoteur d'adhérence intercalée entre l'enjoliveur 4 et la portion de joint profilé 3.

Pour un meilleur maintien encore, l'aile 41 est, de préférence, au contact de la portion de joint profilé 3 sur une partie au moins de sa hauteur, et de préférence sur toute sa hauteur. Ce contact est, de préférence, de chaque côté longitudinal l'aile 41.

Il est possible que l'enjoliveur soit rectiligne selon sa longueur. Toutefois, il est tout à fait possible que l'enjoliveur soit courbe selon sa longueur et soit présent sur deux côtés adjacents de l'élément vitré, voire sur trois côtés de l'élément vitré, comme illustré en figures 1 et 2, voire même tout autour de l'élément vitré.

Il est possible alors que l'enjoliveur comporte au moins deux pattes 45 sur chacun des côtés de l'élément vitré qui sont pourvus de l'enjoliveur.

Il est possible d'optimiser le maintien réalisé par les pattes en fonction de leurs positions respectives dans l'espace afin d'avoir un maintien dans les trois dimensions de l'espace.

Les figures 3 et 4 montrent par ailleurs que, vu notamment en coupe transversale à l'endroit de la présence d'une patte, et de préférence tout le long de l'enjoliveur, selon une première variante de réalisation de l'invention, l'enjoliveur 4 présente une forme générale de U, avec une première aile 41 qui comporte au moins une patte 45 et une seconde aile 47 du U de l'enjoliveur qui pénètre dans une cavité 34 ménagée sur la face extérieure 32 de ladite portion de joint profilé 3, ladite cavité ne débouchant pas sur la face intérieure 33 de ladite portion de joint profilé 3.

Dans cette première variante, cette seconde aile 47 ne comporte pas de patte.

Cette seconde aile 47 est, de préférence, l'aile du U proximale, qui est la plus proche de l'élément vitré à l'état monté et ladite première aile 41 est alors l'aile du U distale, la plus éloignée de l'élément vitré à l'état monté afin de disposer de plus de place dans la portion de joint profilé pour accueillir la patte 45.

Dans une variante non illustrée, il est possible de prévoir que l'enjoliveur 4 présente une forme générale de L, avec la base 40 qui pénètre dans une cavité ménagée sur la face extérieure 32 de la portion de joint profilé 3, cette cavité ne débouchant pas sur la face intérieure 33 de la portion de joint profilé 3.

La figure 8 montre une seconde variante de l'invention, vue en coupe transversale à l'endroit de la présence d'une patte, pour laquelle l'enjoliveur 4 présente une forme générale de U, avec
- comme pour la première variante, une première aile 41 qui comporte à une extrémité 44 opposée à la base 40 au moins une première patte 45, cette première patte 45 étant présente dans la portion de joint profilé 3 en pénétrant dans ladite portion de joint profilé 3 par un trou débouchant sur ladite face extérieure 32 et ne débouchant pas sur une face intérieure 33 de ladite portion de joint profilé 3 et la patte 45 étant intégralement au contact de la portion de joint profilé 3, et
- à la différence de la première variante, une seconde aile 41' qui comporte à une extrémité 44' opposée à la base 40 au moins une seconde patte 45', cette seconde patte 45' étant présente dans ladite portion de joint profilé 3 en pénétrant dans ladite portion de joint profilé 3 par un trou débouchant sur ladite face extérieure 32 et ne débouchant pas sur une face intérieure 33 de ladite portion de joint profilé 3 et la seconde patte 45' étant intégralement au contact de la portion de joint profilé 3.

Les pattes 45 et 45' sont de préférence décalées longitudinalement (c'est-à-dire ne sont pas en face l'une de l'autre) afin d'améliorer le maintien des pattes dans la portion de joint profilé.

## Revendications

1. Vitrage (1) comprenant un élément vitré (2), au moins une portion de joint profilé (3), au moins un enjoliveur (4) présentant une forme allongée qui s'étend selon un bord dudit élément vitré et qui présente en section transversale une forme générale avec une base (40) et au moins une aile (41) s'étendant selon un angle non nul à partir de ladite base, ladite base étant située au-dessus d'une face extérieure (32) de ladite portion de joint profilé (3), **caractérisé en ce que** ladite aile (41) comportant à une extrémité (44) opposée à ladite base (40) au moins une patte (45), qui est présente dans ladite portion de joint profilé (3) en pénétrant dans ladite portion de joint profilé (3) par un trou (30) débouchant sur ladite face extérieure (32) et ne débouchant pas sur une face intérieure (33) de ladite portion de joint profilé (3) et ladite patte (45) est intégralement au contact de ladite portion de joint profilé (3).

2. Vitrage (1) suivant la revendication 1, **caractérisé en ce que** à l'intérieur de ladite portion de joint profilé (3), au moins une section externe de ladite patte (45) est supérieure à une section interne dudit trou (30) en face extérieure (32) de ladite portion de joint profilé.

3. Vitrage (1) suivant la revendication 1 ou 2, **caractérisé en ce que** ladite patte (45) présente une forme générale de T inversé, un tronc du T étant venu de matière avec ladite aile (41).

4. Vitrage (1) suivant la revendication 3, **caractérisé en ce que** ladite patte (45) présente une forme générale de T inversé avec au moins une branche du T en biseau vers le tronc et/ou au moins une branche du T qui présente au moins une dent (49) qui s'étend en direction de ladite aile (41).

5. Vitrage (1) suivant l'une quelconque des revendications 1 à 4, **caractérisé en ce que** ladite patte (45) présente une épaisseur identique à celle de ladite aile (41) et une longueur comprise entre 0,5 et 2 fois sa hauteur à compter l'extrémité (44) de ladite aile (41).

6. Vitrage (1) suivant l'une quelconque des revendications 1 à 5, **caractérisé en ce que** ladite portion de joint profilé (3) présente en face intérieure (33) un bossage (35) en vis-à-vis de ladite patte (45).

7. Vitrage (1) suivant l'une quelconque des revendications 1 à 6, **caractérisé en ce que,** vu en coupe transversale, ledit enjoliveur (4) présente une forme générale de U, avec une première aile (41) qui comporte au moins ladite patte (45) et une seconde aile (47) qui pénètre dans une cavité (34) ménagée sur la face extérieure (32) de ladite portion de joint profilé (3) et ne débouchant pas sur la face intérieure (33) de ladite portion de joint profilé (3).

8. Vitrage (1) suivant l'une quelconque des revendications 1 à 7, **caractérisé en ce que,** vu en coupe transversale, ledit enjoliveur (4) présente une forme générale de U, avec
- une première aile (41) qui comporte à une extrémité (44) opposée à ladite base (40) au moins ladite patte (45), cette première patte (45) étant présente dans ladite portion de joint profilé (3) en pénétrant dans ladite portion de joint profilé (3) par un trou débouchant sur ladite face extérieure (32) et ne débouchant pas sur une face intérieure (33) de ladite portion de joint profilé (3) et ladite patte (45) étant intégralement au contact de ladite portion de joint profilé (3), et
- une seconde aile (41') qui comporte à une extrémité (44') opposée à ladite base (40) au moins une seconde patte (45'), ladite seconde patte (45') étant présente dans ladite portion de joint profilé (3) en pénétrant dans ladite portion de joint profilé (3) par un trou débouchant sur ladite face extérieure (32) et ne débouchant pas sur une face intérieure (33) de ladite portion de joint profilé (3) et ladite seconde patte (45') étant intégralement au contact de ladite portion de joint profilé (3).

9. Vitrage (1) suivant l'une quelconque des revendications 1 à 8, **caractérisé en ce que** ladite portion de joint profilé (3) est au contact de ladite aile (41) sur une partie au moins de sa hauteur, et de préférence en contact de chaque côté longitudinal de ladite aile (41).

10. Vitrage (1) suivant l'une quelconque des revendications 1 à 9, **caractérisé en ce que** ladite portion de joint profilé (3) est au contact d'une surface intérieure (43) de ladite base (40).

11. Procédé de fabrication d'un vitrage (1) suivant l'une quelconque des revendications 1 à 10, ledit vitrage comprenant un élément vitré (2), au moins une portion de joint profilé (3), au moins un enjoliveur (4) présentant une forme allongée qui s'étend selon un bord dudit élément vitré et en section transversale une forme avec une base (40) et au moins une aile (41) s'étendant selon un angle non nul à partir de ladite base, ladite aile (41) comportant à une extrémité (44) opposée à ladite base (40) au moins une patte (45), **caractérisé en ce que** ladite portion de joint profilé (3) est formée par moulage sur ledit élément vitré (2) en étant au contact intégralement de ladite patte (45).

12. Procédé suivant la revendication 11, **caractérisé en ce que** ladite portion de joint profilé (3) présente un trou (30) pour accueillir ladite patte (45) et qui est formé lors du moulage débouchant sur une face extérieure (32) mais pas sur une face intérieure (33) de ladite portion de joint profilé (3).

## Patentansprüche

1. Verglasung (1), umfassend ein Glaselement (2), mindestens eine profilierte Dichtung (3), mindestens eine Verkleidung (4) mit länglicher Form, die sich entlang einer Kante des Glaselements erstreckt und im Querschnitt eine allgemeine Form mit einer Basis (40) und mindestens einem Schenkel (41) aufweist, der sich in einem Nicht-Null-Winkel von der Basis aus erstreckt, wobei sich die Basis über einer Außenseite (32) des Abschnitts mit profilierter Dichtung (3) befindet, **dadurch gekennzeichnet, dass** der Schenkel (41) an einem der Basis (40) gegenüberliegenden Ende (44) mindestens eine Lasche (45) aufweist, die in dem Abschnitt mit profilierter Dichtung (3) vorhanden ist, indem sie in den Abschnitt mit profilierter Dichtung (3) durch ein Loch (30) eindringt, das sich an der Außenseite (32) öffnet und sich nicht an einer Innenseite (33) des Abschnitts mit profilierter Dichtung (3) öffnet, und die Lasche (45) einstückig in Kontakt mit dem Abschnitt mit profilierter Dichtung (3) ist.

2. Verglasung (1) nach Anspruch 1, **dadurch gekennzeichnet, dass** innerhalb des Abschnitts mit profilierter Dichtung (3) mindestens ein äußerer Bereich der Lasche (45) größer ist als ein innerer Bereich des Lochs (30) an der Außenseite (32) des Abschnitts mit profilierter Dichtung.

3. Verglasung (1) nach Anspruch 1 oder 2, **dadurch gekennzeichnet, dass** die Lasche (45) eine allgemeine Form eines umgekehrten T aufweist, wobei ein Stamm des T mit dem Schenkel (41) verbunden ist.

4. Verglasung (1) nach Anspruch 3, **dadurch gekennzeichnet, dass** die Lasche (45) eine allgemeine Form eines umgekehrten T aufweist, wobei mindestens ein Arm des T in Richtung des Stammes abgeschrägt ist und/oder mindestens ein Arm des T mindestens einen Zahn (49) aufweist, der sich in Richtung des Schenkels (41) erstreckt.

5. Verglasung (1) nach einem der Ansprüche 1 bis 4, **dadurch gekennzeichnet, dass** die Lasche (45) eine Dicke aufweist, die mit der des Schenkels (41) identisch ist, und eine Länge, die zwischen dem 0,5- und 2-fachen ihrer Höhe ab dem Ende (44) des Schenkels (41) liegt.

6. Verglasung (1) nach einem der Ansprüche 1 bis 5, **dadurch gekennzeichnet, dass** der Abschnitt mit profilierter Dichtung (3) an der Innenseite (33) einen Vorsprung (35) gegenüber der Lasche (45) aufweist.

7. Verglasung (1) nach einem der Ansprüche 1 bis 6, **dadurch gekennzeichnet, dass,** im Querschnitt betrachtet, die Verkleidung (4) eine allgemeine U-Form aufweist, mit einem ersten Schenkel (41), der mindestens die Lasche (45) umfasst, und einem zweiten Schenkel (47), der in einen Hohlraum (34) eindringt, der an der Außenseite (32) des Abschnitts mit profilierter Dichtung (3) vorgesehen ist und sich nicht an der Innenseite (33) des Abschnitts mit profilierter Dichtung (3) öffnet.

8. Verglasung (1) nach einem der Ansprüche 1 bis 7, **dadurch gekennzeichnet, dass,** im Querschnitt betrachtet, die Verkleidung (4) eine allgemeine U-Form aufweist, mit
- einem ersten Schenkel (41), der an einem der Basis (40) gegenüberliegenden Ende (44) zumindest die Lasche (45) aufweist, wobei die erste Lasche (45) in dem Abschnitt mit profilierter Dichtung (3) vorhanden ist, indem sie in den Abschnitt mit profilierter Dichtung (3) durch ein Loch eindringt, das sich an der Außenseite (32) öffnet und sich nicht an einer Innenseite (33) des Abschnitts mit profilierter Dichtung (3) öffnet, und wobei die Lasche (45) einstückig mit dem Abschnitt mit profilierter Dichtung (3) in Kontakt ist, und
- einem zweiten Schenkel (41'), der an einem der Basis (40) gegenüberliegenden Ende (44') zumindest eine zweite Lasche (45') aufweist, wobei die zweite Lasche (45') in dem Abschnitt mit profilierter Dichtung (3) vorhanden ist, indem sie in den Abschnitt mit profilierter Dichtung (3) durch ein Loch eindringt, das sich an der Außenseite (32) öffnet und sich nicht an einer Innenseite (33) des Abschnitts mit profilierter Dichtung (3) öffnet, und wobei die zweite Lasche (45') einstückig mit dem Abschnitt mit profilierter Dichtung (3) in Kontakt ist.

9. Verglasung (1) nach einem der Ansprüche 1 bis 8, **dadurch gekennzeichnet, dass** der Abschnitt mit profilierter Dichtung (3) auf mindestens einem Teil seiner Höhe mit dem Schenkel (41) in Kontakt ist, und vorzugsweise mit jeder Längsseite des Schenkels (41) in Kontakt ist.

10. Verglasung (1) nach einem der Ansprüche 1 bis 9, **dadurch gekennzeichnet, dass** der Abschnitt mit profilierter Dichtung (3) mit einer Innenfläche (43) der Basis (40) in Kontakt ist.

11. Verfahren zur Herstellung einer Verglasung (1) nach einem der Ansprüche 1 bis 10, wobei die Verglasung ein Glaselement (2), mindestens einen Abschnitt mit profilierter Dichtung (3), mindestens eine Verkleidung (4) mit einer länglichen Form, die sich entlang einer Kante des Glaselements erstreckt, und im Querschnitt eine Form mit einer Basis (40) und mindestens einem Schenkel (41), der sich in einem Nicht-Null-Winkel von der Basis aus erstreckt, aufweist, wobei der Schenkel (41) an einem der Basis (40) gegenüberliegenden Ende (44) mindestens eine Lasche (45) aufweist, **dadurch gekennzeichnet, dass** der Abschnitt mit profilierter Dichtung (3) durch Formen auf dem Glaselement (2) gebildet wird, indem er in einstückig in Kontakt mit der Lasche (45) ist.

12. Verfahren nach Anspruch 11, **dadurch gekennzeichnet, dass** der Abschnitt mit profilierter Dichtung (3) ein Loch (30) zur Aufnahme der Lasche (45) aufweist, das sich während der Formgebung an einer Außenseite (32), aber nicht an einer Innenseite (33) des Abschnitts mit profilierter Dichtung (3) öffnet.

## Claims

1. A glazing (1) comprising a glazed element (2), at least one profiled seal portion (3), at least one trim (4) having an elongate shape which extends along an edge of said glazed element and which in cross section has an overall shape with a base (40) and at least one flange (41) extending at a non-zero angle from said base, said base being situated above an exterior face (32) of said profiled seal portion (3), **characterized in that** said flange (41) comprising at an opposite end (44) to said base (40), at least one tab (45) which is present in said profiled seal portion (3) while penetrating said profiled seal portion (3) via a hole (30) that opens onto said exterior face (32) and does not open onto an interior face (33) of said profiled seal portion (3) and said tab (45) is wholly in contact with said profiled seal portion (3).

2. The glazing (1) as claimed in claim 1, **characterized in that,** on the inside of said profiled seal portion (3), at least one external section of said tab (45) is greater than an internal section of said hole (30) on the exterior face (32) of said profiled seal portion.

3. The glazing (1) as claimed in claim 1 or 2, **characterized in that** said tab (45) has the overall shape of an inverted T, a trunk of the T being formed as an integral part of said flange (41).

4. The glazing (1) as claimed in claim 3, **characterized in that** said tab (45) has the overall shape of an inverted T with at least one branch of the T chamfered toward the trunk and/or at least one branch of the T which has at least one tooth (49) extending toward said flange (41).

5. The glazing (1) as claimed in any one of claims 1 to 4, **characterized in that** said tab (45) has a thickness identical to that of said flange (41) and a length comprised between 0.5 and 2 times its height measured from the end (44) of said flange (41).

6. The glazing (1) as claimed in any one of claims 1 to 5, **characterized in that** said profiled seal portion (3) has, on the interior face (33), a boss (35) facing said tab (45) .

7. The glazing (1) as claimed in any one of claims 1 to 6, **characterized in that,** viewed in cross section, said trim (4) has the overall shape of a U, with a first flange (41) which comprises at least said tab (45) and a second flange (47) which penetrates a cavity (34) formed on the exterior face (32) of said profiled seal portion (3) and which does not open onto the interior face (33) of said profiled seal portion (3).

8. The glazing (1) as claimed in any one of claims 1 to 7, **characterized in that,** viewed in cross section, said trim (4) has the overall shape of a U, with
- a first flange (41) which comprises, at an opposite end (44) to said base (40), at least said tab (45), this first tab (45) being present in said profiled seal portion (3) while penetrating said profiled seal portion (3) via a hole that opens onto said exterior face (32) and does not open onto an interior face (33) of said profiled seal portion (3) and said tab (45) being wholly in contact with said profiled seal portion (3), and
- a second flange (41') which at an opposite end (44') to said base (40) comprises at least one second tab (45'), said second tab (45') being present in said profiled seal portion (3) while penetrating said profiled seal portion (3) via a hole that opens onto said exterior face (32) and does not open onto an interior face (33) of said profiled seal portion (3) and said second tab (45') being wholly in contact with said profiled seal portion (3).

9. The glazing (1) as claimed in any one of claims 1 to 8, **characterized in that** said profiled seal portion (3) is in contact with said flange (41) over at least part of its height, and preferably in contact on each longitudinal side of said flange (41).

10. The glazing (1) as claimed in any one of claims 1 to 9, **characterized in that** said profiled seal portion (3) is in contact with an interior surface (43) of said base (40) .

11. A method of manufacturing a glazing (1) as claimed in any one of claims 1 to 10, said glazing comprising a glazed element (2), at least one profiled seal portion (3), at least one trim (4) having an elongate shape which extends along an edge of said glazed element and, in cross section, having a shape with a base (40) and at least one flange (41) extending at a non-zero angle from said base, **characterized in that** said flange (41) comprises, at an opposite end (44) to said base (40), at least one tab (45) and said profiled seal portion (3) is formed by molding on said glazed element (2) wholly in contact with said tab (45) .

12. The method as claimed in claim 11, **characterized in that** said profiled seal portion (3) has a hole (30) to accommodate said tab (45) and which is formed at the time of molding to open onto an exterior face (32) but not onto an interior face (33) of said profiled seal portion (3).
